(19) **Europäisches Patentamt / European Patent Office / Office européen des brevets**

(11) **EP 3 635 354 B1**

(12) **FASCICULE DE BREVET EUROPEEN**

(45) Date de publication et mention de la délivrance du brevet:
**30.06.2021 Bulletin 2021/26**

(21) Numéro de dépôt: **18728981.4**

(22) Date de dépôt: **14.05.2018**

(51) Int Cl.:
***G01K 11/32*** *(2021.01)*

(86) Numéro de dépôt international:
**PCT/IB2018/053353**

(87) Numéro de publication internationale:
**WO 2018/207163 (15.11.2018 Gazette 2018/46)**

(54) **DISPOSITIF OPTOÉLECTRONIQUE DE MESURE RÉPARTIE PAR FIBRE OPTIQUE**

OPTOELEKTRONISCHE VORRICHTUNG ZUR VERTEILTEN MESSUNG MITTELS OPTISCHER FASER

OPTOELECTRONIC DEVICE FOR DISTRIBUTED MEASUREMENT BY MEANS OF OPTICAL FIBRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2017 FR 1754158**

(43) Date de publication de la demande:
**15.04.2020 Bulletin 2020/16**

(73) Titulaire: **Febus Optics**
**64000 Pau (FR)**

(72) Inventeurs:
• **LANTICQ, Vincent**
**64000 Pau (FR)**

• **CLEMENT, Pierre**
**64000 Pau (FR)**
• **ALMORIC, Etienne**
**64000 Pau (FR)**

(74) Mandataire: **A.P.I. Conseil**
**Immeuble Newton**
**4, rue Jules Ferry**
**64000 Pau (FR)**

(56) Documents cités:
**WO-A1-2013/185810     WO-A1-2015/040566**
**WO-A2-2008/047329**

**Description**

[Domaine de l'invention]

L'invention concerne un dispositif optoélectronique de mesure répartie par fibre optique. L'invention concerne plus précisément un dispositif optoélectronique apte à mesurer les paramètres des spectres de rétrodiffusion Brillouin et Rayleigh et pouvant comporter un moyen apte à séparer la mesure répartie de température et la mesure répartie de déformation.

De tels dispositifs peuvent être utilisés pour le contrôle permanent de l'intégrité et de la sécurité des systèmes et structures dans le génie civil ou l'industrie pétrolière.

[Art antérieur]

Les dispositifs optoélectroniques de mesure répartie par fibre optique sont généralement utilisés pour mesurer, en temps réel, la température et les déformations des infrastructures de grandes tailles afin de surveiller leur santé structurelle et d'assurer leur maintenance. Ils fournissent, à chaque mesure, les informations de température et de déformation en tout point de la fibre optique qui leur est raccordée. Les mesures sont généralement réalisées avec une portée de quelques mètres à plusieurs dizaines de kilomètres et une résolution métrique voire centimétrique. Ainsi, par exemple, une mesure peut être réalisée tous les mètres sur un ouvrage d'une longueur de 20 kilomètres.

Des dispositifs optoélectroniques de mesure répartie par fibre optique exploitant le phénomène de rétrodiffusion Brillouin sont déjà connus et utilisés pour des applications de mesures de température et de déformation dans le génie civil. Ces systèmes trouvent notamment un terrain privilégié pour la surveillance des ouvrages linéaires comme les ponts, les barrages, les digues hydrauliques en terre ou les réseaux de transport de fluides (eau, hydrocarbures, gaz) afin de contrôler les mouvements de terrain (glissement, tassement) ou les déformations des conduites enterrées ou non.

Pour pouvoir analyser des variations d'intensité sur des dizaines de kilomètres avec une résolution spatiale métrique, les systèmes de mesure utilisent en général la réflectométrie optique temporelle OTDR (de l'acronyme anglais « Optical Time Domain Reflectometry »). L'OTDR consiste à propager une impulsion lumineuse dans la fibre optique à analyser et à mesurer l'intensité retour en fonction du temps. Le temps que met la lumière rétrodiffusée à être détectée permet de localiser l'évènement à mesurer (coordonnée d'un point z le long de la fibre optique). La résolution spatiale est alors fonction de la largeur de l'impulsion lumineuse: une impulsion de largeur 10 ns entrainant par exemple une résolution d'environ 1 m. Grâce au phénomène de rétrodiffusion Brillouin combiné à la technique de l'OTDR, on réalise des mesures de température et de déformation réparties tout le long de la fibre, sur plusieurs dizaines de kilomètres, avec une résolution métrique voire centimétrique.

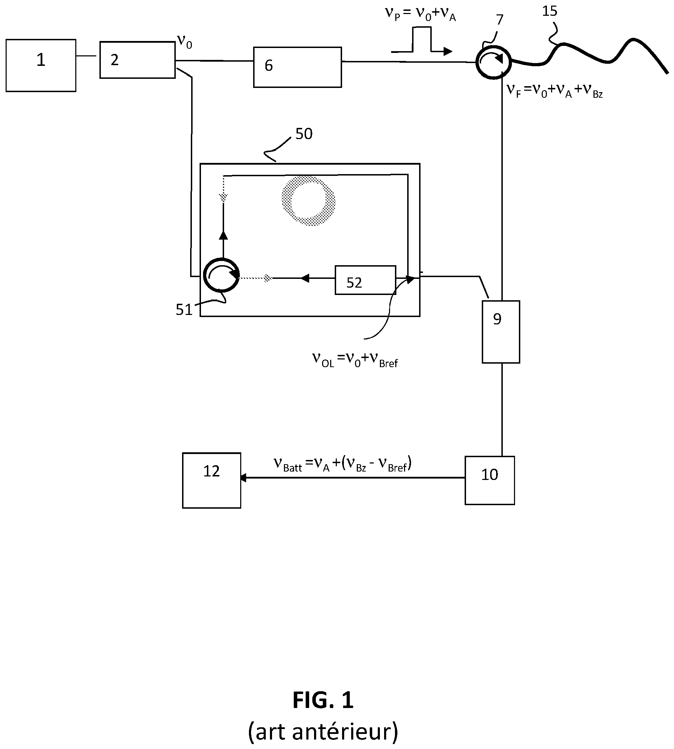

Les mesures le long de la fibre sont effectuées avec un dispositif tel que schématisé sur la Figure 1. La lumière issue d'une source lumineuse 1, tel qu'un laser, est répartie dans deux bras. L'un des bras, appelé « pompe », permet d'envoyer le signal lumineux, sous forme impulsionnelle grâce à un modulateur acousto-optique 6, dans la fibre optique 15 à tester. Un signal est rétrodiffusé par la fibre optique 15, selon le phénomène Brillouin. Selon le phénomène Brillouin, les composantes spectrales de rétrodiffusion de la lumière par le matériau de constitution de la fibre optique, en général de la silice, présentent une fréquence $vB_z$ décalée de celle $v0$ de l'onde lumineuse incidente. Le décalage fréquentiel Brillouin est en général de l'ordre de 11 GHz pour une onde incidente de longueur d'onde $\lambda_0$ = 1550 nm. Une telle fréquence est très élevée. Pour pouvoir effectuer le traitement sur le signal rétrodiffusé on peut transposer la fréquence à une plus basse fréquence pour réduire la bande passante du détecteur à utiliser et ainsi éliminer une grande partie du bruit. Pour cela on procède à une détection hétérodyne consistant à recombiner le signal rétrodiffusé à analyser avec une onde provenant de l'autre bras, appelé « oscillateur local » 50. Cet oscillateur local 50 peut par exemple se présenter sous la forme d'un laser en anneau Brillouin. Dans ce cas, le signal lumineux continu de fréquence $v_0$ est dirigé vers un circulateur 51 qui le dirige à son tour vers une fibre de référence. Cette fibre de référence émet par diffusion spontanée amplifiée un rayonnement en sens inverse de fréquence $v_0$ - $v_{Bref}$ que le circulateur envoie vers un coupleur 52. Ce dernier envoie une partie de l'énergie vers le signal de sortie, tandis qu'il redirige l'autre partie vers la fibre de référence où le rayonnement est amplifié d'un facteur de gain G par diffusion Brillouin stimulée (spontanée amplifiée) avant d'être redirigé vers le circulateur 51 qui renvoie le rayonnement amplifié vers le coupleur 52 et la sortie. L'oscillateur local 50 forme alors un anneau d'amplification par diffusion Brillouin stimulée. Un photo-détecteur 10 permet de récupérer le battement des deux signaux. Le battement récupéré est ensuite amplifié puis transmis à un analyseur 12 de spectre électrique. Un tel dispositif optoélectronique de mesure répartie par diffusion Brillouin dans une fibre optique, utilisant une seule fréquence laser pour générer une impulsion de lumière, est plus particulièrement décrit dans le document US 7 283 216. Le document JP 2010 217029 décrit un autre dispositif optoélectronique de mesure répartie par diffusion Brillouin utilisant une seule fréquence laser pour générer une impulsion de lumière. Le dispositif vise, via une détection hétérodyne, à réduire la largeur de bande de réception de lumière de la lumière de rétrodiffusion Brillouin de façon à réduire les coûts et de faciliter le traitement de la lumière rétrodiffusée. Pour cela le dispositif comporte une fibre de référence similaire à la fibre test de façon à mesurer une différence de fréquence entre les lumières de rétrodiffusion de la ligne de référence et de la ligne à tester. Néanmoins, un des inconvénients de ces dispositifs est qu'ils présentent de longues durées de mesures. En effet, typiquement, la durée de mesure est supérieure à 1 minute pour une fibre de 10 km.

WO2008/047329 décrit un procédé de détection distribuée au moyen d'un laser de référence à verrouillage de Stokes.

De plus, lors de la mesure de rétrodiffusion Brillouin, les paramètres de température et de déformation créent tous deux le même phénomène physique dans la fibre optique (variation de la fréquence de rétrodiffusion Brillouin $v_B$). Ainsi, la fréquence Brillouin $v_B$, dépend linéairement de la température et de la déformation dans le matériau. Le décalage fréquentiel $\Delta v_B$ entre l'onde incidente et l'onde rétrodiffusée varie donc avec les variations de température $\Delta T$ et de déformation $\varepsilon$ suivant l'équation : $\Delta v_B = C_T \Delta T + C_\varepsilon \varepsilon$, où $C_T$ et $C_\varepsilon$ sont respectivement les coefficients de sensibilité de température et de déformation propres à la fibre optique utilisée. Ainsi, à l'heure actuelle il est impossible de pouvoir différencier le paramètre de température et celui de déformation sur une même mesure de rétrodiffusion Brillouin.

Le seul moyen de palier à ce problème avec ce type d'appareil est de fixer une des deux contraintes, soit en fixant mécaniquement la fibre optique pour pouvoir mesurer seulement de la température, soit en isolant thermiquement ou en faisant l'approximation que la température est stable autour de la fibre optique dans le but de mesurer seulement de la déformation. Ces méthodes ne sont jamais efficaces à 100% et il reste toujours une incertitude résiduelle sur la mesure car il est impossible de garantir qu'une fibre est protégée de toutes contraintes (par exemple frottement ou écrasement du tube) notamment lorsque le câble qui la contient n'est plus accessible.

D'autres solutions ont été proposées telle que la réalisation de mesures réparties de température par diffusion Raman (Alahbabi, M. N., et al. Optics Letters 30, no. 11 (June 1, 2005): 1276-78) et d'utiliser cette mesure pour soustraire l'effet de la température sur la fréquence Brillouin afin de déterminer la déformation. Mais cela pose souvent d'importantes difficultés de mise en œuvre car les deux mesures ne sont pas réalisées dans la même fibre, et deux instruments distincts sont utilisés. Donc, un alignement spatial parfait des mesures des deux instruments est nécessaire. Il existe en outre une forte complexité, une dégradation de la précision notamment liée aux dérives cumulatives des deux appareils et également un surcout associé à l'achat de deux dispositifs et à l'ingénierie d'utilisation des deux mesures pour traduire les résultats en mesure simultanée de température et déformation (par exemple alignement des grilles de mesure, estimation des incertitudes, correction des dérives). Enfin, de façon générale, les systèmes reposant sur deux mesures distinctes génèrent des résultats de qualité médiocre car généralement les erreurs liées aux deux mesures se cumulent et il existe une dérive des fonctions de transferts de chaque mesure qui doit être prise en compte dans l'incertitude sur les mesures à long terme.

Ainsi, il existe également un besoin pour un dispositif capable en une seule mesure et à partir d'une seule fibre optique à tester de différencier le paramètre de température et celui de déformation.

[Problème technique]

L'invention a donc pour but de remédier aux inconvénients de l'art antérieur. L'invention vise notamment à proposer un dispositif optoélectronique de mesure répartie par fibre optique, simple et peu encombrant et capable de produire une mesure plus précise et rapide ne comportant pas ou peu de parasite sur les basses fréquences. Pour cela, le dispositif optoélectronique présente une nouvelle architecture permettant la génération d'un oscillateur local n'induisant pas ou peu de signaux parasites. Une fibre de référence est incluse dans le bras « pompe » pour générer un signal de diffusion spontanée amplifiée permettant de s'affranchir de tous les contrôles préalables nécessaires.

L'invention vise également à proposer un dispositif optoélectronique de mesure répartie par fibre optique, capable en une seule mesure et à partir d'une seule fibre optique à tester, de différencier le paramètre de température et celui de déformation. Pour cela, le dispositif optoélectronique présente une nouvelle architecture permettant une mesure simultanée de la raie anti-Stokes de rétrodiffusion Brillouin et de la rétrodiffusion Rayleigh.

En outre, le dispositif proposé selon l'invention permet de réaliser des analyses beaucoup plus rapides que les dispositifs de l'art antérieur tout en comportant moins d'éléments consommateurs d'énergie que les systèmes existants décrits dans l'art antérieur ce qui permet d'avoir un dispositif portable adapté à des interventions par un opérateur à pieds ou à des mesures occasionnelles.

[Brève description de l'invention]

A cet effet, le dispositif optoélectronique de mesure répartie par fibre optique selon l'invention, comprend une source de lumière continue émettant un signal lumineux continu à une première fréquence vo, un modulateur apte à imposer un décalage de fréquence d'au moins 100 MHz au signal continu et à le transformer en un signal impulsionnel destiné à être injecté dans une fibre optique à tester et un module de photo-détection apte à détecter un signal de rétrodiffusion, provenant de la fibre optique 15 à tester, issu d'une rétrodiffusion Brillouin spontanée amplifiée et/ou d'une rétrodiffusion Rayleigh provenant de ladite fibre optique à tester,

ledit dispositif étant principalement caractérisé en ce qu'il comprend en outre un premier coupleur et un deuxième coupleur, ledit premier coupleur étant apte à diviser ledit signal lumineux continu en deux signaux de fréquence identique répartis dans deux bras,

- un premier bras reliant le premier coupleur à un bloc fibre de référence comportant une fibre de référence, ledit bloc fibre de référence étant apte à émettre un autre signal lumineux de fréquence $v_0 - v_{bref}$, où $v_{bref}$ est la fréquence Brillouin de la fibre de référence sans déformation et à une température de référence,
- un second bras reliant le premier coupleur au deuxième coupleur situé en amont du module de photo-détection et apte à transmettre au deuxième coupleur un signal lumineux continu à une fréquence vo, constituant ainsi un oscillateur local,

ledit deuxième coupleur étant apte à coupler le signal de l'oscillateur local au signal de rétrodiffusion provenant de ladite fibre optique à tester avant de le transmettre au module de photo-détection,
le signal de rétrodiffusion étant modulé à une fréquence $v_{rB}$ égale à $v_0 - v_{bref} + v_A + v_{bAS}$, où $v_{bAS}$ est la fréquence de rétrodiffusion Brillouin anti-Stokes pouvant être mesurée en tout point z de ladite fibre optique, et
ledit module de photo-détection étant apte à transmettre le signal de rétrodiffusion reçu, à un module de traitement apte à relier la modulation du signal de rétrodiffusion à une valeur de température et à une valeur de déformation en tout point z de ladite fibre optique à tester.

Ainsi, le dispositif utilisé permet de s'affranchir de tous les contrôles préalables nécessaires lorsque l'on utilise un oscillateur local présentant une configuration de laser en anneau Brillouin. En effet, dans la configuration selon l'invention, le signal retour émis par la fibre de référence est un signal de diffusion spontanée amplifiée (par diffusion Stimulée), et non le produit d'une résonnance dans une cavité de type laser qui par conséquent dépendrait fortement de la longueur exacte de la cavité, difficile à maitriser en fonction de paramètres d'influence comme la température.

En outre, cette nouvelle architecture comportant notamment la présence d'un bloc de référence positionné sur la ligne de pompe donne la possibilité à l'utilisateur de mesurer la raie anti-Stokes de rétrodiffusion Brillouin. Une telle configuration permet d'améliorer la qualité de mesure en ayant un signal dans l'oscillateur local sans parasite à basses fréquences. Il n'est donc ensuite pas nécessaire d'utiliser de filtre électrique basse fréquence en sortie du module de photo-détection. Enfin, une telle configuration présente un moindre encombrement et une consommation électrique réduite. En outre, En outre, l'oscillateur local étant constitué uniquement du signal provenant directement du laser source, il ne comporte aucun élément pouvant altérer la qualité du signal.

Selon une autre caractéristique avantageuse du dispositif, il peut comprendre en outre un troisième coupleur et un quatrième coupleur, le troisième coupleur étant apte à diviser ledit signal lumineux continu provenant de la source lumineuse en deux signaux de fréquence identique répartis dans deux bras,

- un premier bras reliant le troisième coupleur au premier coupleur et apte à transmettre au premier coupleur un signal lumineux continu à une fréquence $v_0$,
- un second bras reliant le troisième coupleur au quatrième coupleur situé en amont du modulateur et apte à transmettre au quatrième coupleur un signal initial à une fréquence vo,

ledit quatrième coupleur étant apte à coupler le signal initial vo au signal lumineux de fréquence $v_0 - v_{bref}$, provenant du bloc de référence.

Cette caractéristique optionnelle basée notamment sur la présence d'une série de coupleurs donne la possibilité à l'utilisateur de différencier, en une seule mesure et sur une seule fibre à tester, le paramètre de température et celui de déformation. Elle permet une mesure simultanée de la raie anti-Stokes de rétrodiffusion Brillouin et de la rétrodiffusion Rayleigh et ce à partir d'une seule mesure, cette dernière étant toujours située autour de la fréquence $v_0 + v_A$ (.$v_A$ dans le domaine électrique) Cela est particulièrement avantageux par rapport aux dispositifs de l'art antérieur qui nécessitent la mise en œuvre de deux mesures, par exemple via l'utilisation de deux dispositifs de mesure (par exemple Brillouin et Raman).

Avantageusement, le dispositif présente un signal de rétrodiffusion contenant le spectre de rétrodiffusion Rayleigh à une fréquence $v_{rR}$ égale à $v_0 + v_A$ et le spectre de rétrodiffusion Brillouin à une fréquence $v_{rB}$ égale à $v_0 - v_{bref} + v_A + v_{bAS}$. De façon préférée, il n'y a pas de recouvrement entre les deux spectres. Cela permet notamment de pourvoir réaliser une analyse distincte de l'influence de la température et de la déformation. En outre, de façon préférée, le module de photo-détection reçoit un signal issu de la rétrodiffusion de Rayleigh modulé à la fréquence du modulateur acousto-optique $v_A$ et de la rétrodiffusion de Brillouin modulé à la fréquence $v_{BAS} - v_{bref} + v_A$ sans qu'il n'y ait de recouvrement entre les deux spectres.

Selon d'autres caractéristiques avantageuses du dispositif :

- la fibre de référence est positionné le même bras optique que la fibre optique à tester. La fibre de référence se trouvant sur le bras test, l'oscillateur local ne comporte plus aucun élément pouvant altérer la qualité du signal lumineux qui s'y propage. En effet, l'oscillateur local provient directement du laser source et va directement au module de détection. Il y a donc bien une amélioration de la qualité de la mesure.

- la fibre optique de référence du bloc fibre de référence présente une fréquence Brillouin différente de celle de la fibre optique à tester.

- la fréquence Brillouin de la fibre optique de référence présente un écart de fréquence avec la fréquence Brillouin de la fibre optique à tester, compris entre 300 MHz et 1 GHz.

- le second bras peut comporter un module d'hybridation de polarisation, ou un module de séparation (« beam splitter »), ou un brouilleur de polarisation disposés alors en amont des entrées d'un deuxième coupleur. De préférence, le second bras peut comporter un brouilleur de polarisation disposé alors en amont des entrées d'un deuxième coupleur. Ces éléments permettent d'éliminer le bruit de polarisation entre le bras test et l'oscillateur local.

- le signal impulsionnel provenant du modulateur comporte au moins deux composantes : une composante impulsionnelle de fréquence $vp1 = v_0 - v_{bref} + v_A$, et une composante impulsionnelle de fréquence $vp2 = v_0 + v_A$. En particulier, le signal impulsionnel provenant du modulateur comporte deux composantes : une composante impulsionnelle de fréquence $vp1 = v_0 - v_{bref} + v_A$, et une composante impulsionnelle de fréquence $vp2 = v_0 + v_A$. Cela engendre une différence notable de performance et de qualité de mesure par rapport aux dispositifs de l'art antérieur. Un tel signal impulsionnel peut être basé sur le fait que l'oscillateur local provient directement du laser source et va directement au module de détection.

L'invention a également pour objet un procédé de traitement numérique d'un signal par exemple issu d'un dispositif optoélectronique de mesure répartie par fibre optique selon l'invention, ledit procédé comprenant les étapes suivantes :

- numériser un signal correspondant au battement entre un signal rétrodiffusé issu d'une fibre optique à tester et un signal de référence, et détecté par un module de photo-détection,

- découper ledit signal numérisé en une pluralité de tronçons (T1...Ti...TN) par application d'une fenêtre temporelle glissante de type fenêtre rectangulaire ou de Hamming, ou de Hann ou de Blackman-Harris, chaque tronçon présentant une largeur égale à la largeur temporelle d'une impulsion du signal impulsionnel injecté dans la fibre optique à tester, la largeur de chaque tronçon étant en outre centrée autour d'une date t correspondant à un point de coordonnée z de ladite fibre optique à tester,

- calculer, par utilisation d'un algorithme de transformée de fourier discrète, le spectre fréquentiel de chaque tronçon (T1...Ti...TN) dudit signal numérisé;

- répéter les trois premières étapes et moyenner les spectres fréquentiels obtenus pour chaque point z de ladite fibre optique à tester ;

- à partir des spectres fréquentiels moyennés, déterminer la variation des maxima de fréquence de la rétrodiffusion Brillouin, et/ou la variation de l'intensité totale de la rétrodiffusion Brillouin et/ou la variation de l'intensité totale de la rétrodiffusion Rayleigh, en fonction du temps aller et retour $t_z$ de rétrodiffusion,

- appliquer un coefficient de sensibilité à la température d'une part et un coefficient de sensibilité à la déformation d'autre part, sur ladite ou lesdites variations déterminées, afin d'obtenir un résultat en terme de mesure répartie en température et/ou un résultat en terme de mesure répartie en déformation.

Le procédé selon l'invention porte sur un traitement numérique des signaux pouvant être appliqué dès la sortie d'un module de photo-détection. Le traitement du signal qui suit se fait numériquement au niveau spectral et non directement sur le signal. Ce traitement comprend notamment la réalisation d'un découpage du signal numérisé en pluralité de tronçons dont la largeur est égale à la largeur temporelle d'une impulsion du signal impulsionnel injecté dans la fibre optique à tester. Ainsi, la durée d'une mesure est courte relativement à la durée de mesure des systèmes de l'art antérieur. Typiquement la durée d'une mesure est de 1 à quelques secondes pour une fibre de 10 km.

Selon une autre caractéristique avantageuses du procédé, il peut comprendre la détermination, à partir des spectres fréquentiels moyennés, de la variation des maxima de fréquence de la rétrodiffusion Brillouin Anti-Stokes et la variation de l'intensité totale de la rétrodiffusion Brillouin et la variation de l'intensité totale de la rétrodiffusion Rayleigh en fonction du temps aller et retour $t_z$ de rétrodiffusion, ainsi que la détermination du rapport d'intensité totale Rayleigh et d'intensité totale Brillouin en tout point (z) de la fibre. Ce rapport correspondant au ratio de Landau Placzek.

Cette caractéristique optionnelle permet à l'utilisateur de différencier, en une seule mesure traitée, le paramètre de température et celui de déformation. Cela est particulièrement avantageux par rapport aux procédés de l'art antérieur qui nécessitent la mise en œuvre d'un traitement de signaux provenant d'au moins deux mesures.

En outre, dans le cadre du procédé de traitement numérique selon l'invention, le signal numérisé peut avantageusement présenter portion par portion au moins deux spectres correspondant au spectre de Brillouin $v_A + ((v_{bAS(z)} - v_{bref})$ et au spectre de Rayleigh $v_A$.

De façon préférée, le procédé de traitement numérique selon l'invention peut également comprendre une sous étape de détermination d'un rapport intensité totale Rayleigh sur intensité totale Brillouin en tout point de la fibre dans le but d'en déterminer un ratio de Landau Placzek dépendant du paramètre de température.

D'autres avantages et caractéristiques de l'invention apparaitront à la lecture de la description suivante donnée à titre d'exemple illustratif et non limitatif, en référence aux Figures annexées qui représentent :

- La Figure 1, déjà décrite, un schéma d'un dispositif optoélectronique de mesure répartie par rétrodiffusion Brillouin selon l'art antérieur,

- La Figure 2, un schéma d'un dispositif optoélectronique de mesure répartie par fibre optique selon l'invention, les éléments en pointillés étant des éléments optionnels,

- Les Figures 3A à 3C, des traces temporelles obtenues aux premières étapes du procédé de traitement numérique du signal numérisé, et des spectres fréquentiels moyennés, interprétables, obtenus suite à la quatrième étape du procédé selon l'invention relatif à la portion T1 (trait plein) TN (trait pointillés),

- Les Figures 4A à 4B, la fréquence Brillouin (4A) ainsi que le rapport Landau Placzek (4B) à deux températures différentes, obtenue à partir d'un ensemble de spectres de diffusion (Rayleigh et Brillouin) sur une fibre de longueur d'environ 150 m,

- Les Figures 5A à 5B, des mesures réparties de températures (5A) et de déformation (5B), obtenues sur une fibre de 150 mètres avec le dispositif selon l'invention, à partir d'une seule mesure.

[Description détaillée de l'invention]

On désigne par fibre optique à tester (ou sous test) dans la suite, la fibre optique disposée le long d'un ouvrage à surveiller et qui permet de réaliser une mesure répartie.

On entend par fibre optique de référence, une fibre optique pouvant avoir une fréquence Brillouin différente, identique ou sensiblement identique de la fréquence Brillouin de la fibre test. Cette fibre optique de référence est maintenue tout au long de la mesure sans déformation et à une température de référence. Le terme fibre optique à fréquence Brillouin différente désigne une fibre optique dont la fréquence Brillouin présente un écart de fréquence avec la fréquence Brillouin de la fibre optique à tester, d'au moins 200 MHz et de façon préféré un écart d'au moins 300 MHz.

On entend par « une seule mesure », une série d'impulsion permettant d'obtenir un spectre fréquentiel moyenné.

On entend par durée d'une mesure, le temps nécessaire au système pour afficher une mesure à la précision nominale en termes de déformation ou de température. Cette durée inclut à la fois :

- le temps d'acquisition,
- le temps de calcul du système (Transformées de Fourrier, moyennages...)

Par sensiblement ou sensiblement identique, on entend au sens de l'invention une valeur variant de moins de 30 % par rapport à la valeur comparée, de préférence de moins de 20 %, de façon encore plus préférée de moins de 10 %.

Par majorité, on entend au sens de l'invention au moins de 50 %.

La présente invention se rapporte d'une façon générale aux dispositifs optoélectroniques de mesure répartie par fibre optique. L'invention concerne plus précisément une configuration optoélectronique du dispositif permettant d'augmenter sa précision, de diminuer sa consommation électrique, de réduire son encombrement, de réduire la durée d'une mesure et de fournir une mesure répartie séparée de la température et de la déformation.

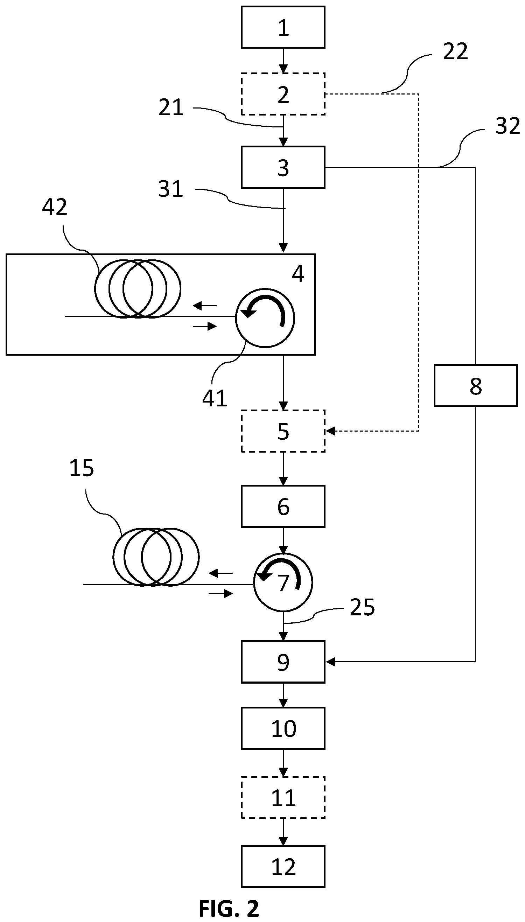

La Figure 2 schématise plus particulièrement la configuration d'un dispositif optoélectronique de mesure répartie par fibre optique selon l'invention. Les mêmes références que sur la Figure 1 sont utilisées pour désigner les mêmes éléments. Le dispositif selon l'invention comprend également une source lumineuse 1 émettant un signal lumineux continu. Cette source de lumière 1 est avantageusement matérialisée par un laser, de préférence un laser DFB (de l'acronyme anglais « Distributed Feedback »), utilisant un réseau de Bragg. La longueur d'onde d'émission $\lambda_0$ est de préférence égale ou sensiblement égale à 1550 nm, à la fréquence correspondante $v_0$. La raie de l'onde lumineuse émise est centrée sur la longueur d'onde d'émission $\lambda_0$ et sa largeur est au plus de 1 MHz.

Avantageusement, la source de lumière 1 est accordable en fréquence et il est possible de faire varier sa fréquence de manière continue à une vitesse d'au moins 1 GHz/sec sur un intervalle d'au moins 125 GHz. De façon plus préférée, la source de lumière 1 est apte à émettre un rayonnement laser continu à une fréquence optique $v_0$ pouvant être variée, sur la durée de l'ensemble des acquisitions, suivant une rampe continue de 250 GHz au moins. Cette modulation de fréquence doit être continue et non par pas de fréquence et permet ainsi de diminuer les effets d'interférences intraimpulsion et donc le bruit. Cette caractéristique est particulièrement importante lorsqu'un suivi de la rétrodiffusion Rayleigh est souhaité.

La source de lumière 1, par exemple un laser, émet un signal lumineux continu moyennement puissant, typiquement de l'ordre de 20 mW, dans une fibre optique le reliant à un premier coupleur 3 ou au troisième coupleur 2.

Le **premier coupleur 3,** recevant le signal lumineux via source de lumière 1 ou via le premier bras 21 du troisième coupleur 2, est apte à diviser ledit signal lumineux continu en deux signaux de fréquence identique répartis dans deux bras.

Le premier bras 31 relie le premier coupleur 3 à un bloc fibre de référence 4 comportant une fibre de référence 42, ledit bloc fibre de référence 4 étant apte à émettre un autre signal lumineux de fréquence $v_0 - v_{bref}$, où $v_{bref}$ est la fréquence Brillouin de la fibre de référence 42, destiné à être transmise au modulateur 6 ou à être mélangé audit signal initial par un quatrième coupleur 5. Ainsi, le bloc de référence 4 permet de renvoyer l'information dans une bande de fréquence plus basse améliorant ainsi les performances du dispositif. La fibre optique de référence 42 est conservée sans déformation et à une température de référence. Le second bras 32 relit le premier coupleur 3 à un deuxième coupleur 9 situé en aval du modulateur 6 et est apte à transmettre au deuxième coupleur 9 un signal lumineux continu à une fréquence vo, constituant ainsi un oscillateur local. De façon plus particulière, le second bras 32 relit le premier coupleur 3 à un deuxième coupleur 9 situé en amont du module de photo-détection 10 et de préférence il est positionné juste avant ledit module de photo-détection 10.

Le premier coupleur 3 est apte à diriger suffisamment d'énergie du signal lumineux vers le premier bras 31 de façon à dépasser le seuil de Diffusion Brillouin Stimulée (Stimulated Brillouin Scattering) et ainsi que, dans la fibre de référence 42, l'onde rétrodiffusée soit décalée en fréquence de $-v_{bref}$ par rapport à l'onde optique. De façon avantageuse, le premier coupleur 3 est apte à diriger la majorité de l'énergie du signal lumineux vers le premier bras 31. De préférence, le premier coupleur 3 est apte à diriger plus de 70%, de façon plus préférée plus de 80 %, de façon encore plus préférée sensiblement 90 % de l'énergie du signal lumineux vers le premier bras 31.

Le bloc de référence 4 comprend avantageusement un circulateur 41 qui dirige le signal lumineux continu incident, à la fréquence vo, provenant du premier coupleur 3, dans une fibre optique 42 de référence. Cette fibre optique de référence 42 peut être identique à la fibre optique 15 à tester. Avantageusement, la fibre de référence 42 n'est soumise à aucune déformation. Elle est placée à une température de référence, en général comprise entre 18 et 25°C, de préférence à une température de l'ordre de 20°C. Cette fibre de référence 42 permet elle aussi d'émettre un signal par rétrodiffusion Brillouin en réponse au signal continu émanant de la source lumineuse 1, de sorte que le bloc de référence 4 permet de transformer la fréquence incidente $v_0$ en une fréquence $v_{br} = v_0 - v_{Bref}$, où $v_{Bref}$ représente la fréquence Brillouin de la fibre optique 42 de référence, et qui se situe par exemple dans la même gamme de fréquence que la fréquence $v_{bAS}$ issue du signal rétrodiffusé par la fibre optique 15 à tester. En outre, de façon avantageuse, la fibre optique de référence 42 du bloc fibre de référence 4 présente une fréquence Brillouin différente de celle de la fibre optique 15 à tester. Par exemple, la fibre optique de référence 42 présente une fréquence Brillouin décalée d'au moins 200 MHz, de préférence d'au moins 300 MHz par rapport à la réponse Brillouin de la fibre à mesurer. De préférence, la fréquence Brillouin de la fibre optique de référence 42 présente un écart de fréquence avec la fréquence Brillouin de la fibre optique 15 à tester, compris entre 300 MHz et 1 GHz. Ainsi, cela permet d'éviter tout recouvrement spectral des spectres Rayleigh et Brillouin tout en limitant les exigences pour le traitement de signal ultérieur. En effet, le module de photo-détection 10 situé en fin du montage optoélectronique reçoit un signal issu de la rétrodiffusion de Rayleigh qui se trouve modulé à la fréquence du modulateur acousto-optique $v_A$ (par exemple 200 MHz) et de la rétrodiffusion de Brillouin modulé à la fréquence ($v_{bAS} - v_{bref} + v_A$) sans qu'il n'y ait de recouvrement entre les deux spectres.

Une telle architecture permet de positionner la fibre de référence 42 sur le même bras optique que la fibre optique 15 à tester. Cela a pour avantage d'améliorer la qualité de mesure en ayant un signal dans l'oscillateur local issu directement de la source et donc sans parasites à basses fréquences. Il n'est donc ensuite pas nécessaire d'utiliser de filtre électrique basse fréquence en sortie du module de photo-détection. Cette configuration permet également de mesurer la raie anti-Stokes de la rétrodiffusion Brillouin et, contrairement aux dispositifs de l'art antérieur, d'accéder à des mesures proches du DC (par exemple autour de 100 MHz) dans le domaine électrique où il n'était jusqu'alors pas possible de faire des mesures fiables.

Le **troisième coupleur** 2 permet de diviser le signal lumineux incident émis par la source lumineuse 1, en deux signaux de fréquence identique répartis dans deux bras 21, 22 du dispositif.

Le premier bras 21 relie le troisième coupleur 2 au premier coupleur 3 et le premier bras 21 est apte à transmettre au premier coupleur 3 un signal lumineux continu à une fréquence $v_0$. Le second bras 22 relie le troisième coupleur 2 à un quatrième coupleur 5 situé en amont du modulateur 6 et ce second bras 22 est apte à transmettre au quatrième coupleur 5 un signal initial à une fréquence $v_0$.

De façon avantageuse, le troisième coupleur 2 est apte à diriger la majorité de l'énergie du signal lumineux vers le premier bras 21. De préférence, le troisième coupleur 2 est apte à diriger plus de 70%, de façon plus préférée plus de 80 %, de façon encore plus préférée sensiblement 90 % de l'énergie du signal lumineux vers le premier bras 21.

Comme cela a été spécifié, le **quatrième coupleur** 5 est apte à mélanger le signal initial $v_0$ provenant du second bras 22 du troisième coupleur 2 au signal lumineux de fréquence $v_0 - v_{bref}$ provenant de la fibre de référence 42 et à les injecter dans le modulateur 6. Les signaux issus de la fibre optique de référence 42 sont donc recombinés au signal initial $v_0$ dans le quatrième coupleur 5. A la sortie du quatrième coupleur 5, on obtient un signal qui contient un signal à la fréquence $v_0 - v_{bref}$ provenant de la fibre optique de référence 42 et un signal à la même fréquence que le signal initial $v_0$.

Le **modulateur 6** est apte à imposer un décalage de fréquence d'au moins 100 Mhz au signal continu et à le transformer en un signal impulsionnel destiné à être injecté dans une fibre optique 15 à tester. De façon préférée, le modulateur 6 est un modulateur acousto-optique 6. Le modulateur 6 peut être associé à un ou plusieurs amplificateurs si nécessaire pour donner du gain. Le signal provenant du modulateur 6 comporte au moins deux composantes,

- une composante continue de fréquence $v_0 - v_{bref}$, transformée en une composante impulsionnelle de fréquence $v_{p1} = v_0 - v_{bref} + v_A$, et

- une composante continue de fréquence $v_0$, transformée en une composante impulsionnelle de fréquence $v_{p2} = v_{0 + v_A}$.

Le modulateur 6 est apte à générer un signal impulsionnel présentant une fréquence décalée par rapport à la fréquence du signal lumineux continu. Le décalage de fréquence $v_A$ appliqué à ladite fréquence décalée peut être supérieur ou égal à 100 MHz. La fréquence $v_A$ est la fréquence propre au modulateur 6 et est généralement supérieure ou égale à 100 MHz et inférieure ou égale à 1 GHz, de préférence sensiblement égale à 200 MHz. La largeur temporelle de l'impulsion ainsi générée peut par exemple être comprise entre 10 ns et 500 ns, de préférence elle est sensiblement égale à 20 ns. Le signal impulsionnel est alors dirigé vers un circulateur 7 qui l'injecte ensuite dans la fibre optique 15 à tester, sur laquelle doit être effectuée la mesure répartie. Au passage du signal impulsionnel, la fibre optique 15 émet en sens inverse un signal par rétrodiffusion Brillouin spontanée à la fréquence $v_{F1} = v_0 - v_{bref} + v_A + v_{bAS(z)}$ ; et $v_0 - v_{bref + v_A} - v_{bS(z)}$ dans lequel $v_{bAS}$ est la fréquence Brillouin anti-Stokes à mesurer en tout point de coordonnée z le long de la fibre optique 15. $v_{bS(z)}$ est la fréquence Brillouin Stokes. La fibre optique 15 émet également en sens inverse un signal par rétrodiffusion de Rayleigh à la fréquence $v_{F2} = v_0 + v_A$.

Ces signaux rétrodiffusés sont dirigés, par le circulateur 7, vers le deuxième coupleur 9 où ils sont recombinés avec un signal $v_0$ provenant de l'oscillateur local. En outre, avantageusement, le second bras 32 peut comporter un brouilleur de polarisation 8 disposé alors en amont des entrées d'un deuxième coupleur 9. Cela permet de diminuer les effets d'interférences dus à la polarisation entre le bras de l'oscillateur local et le bras de mesure 25, aussi appelé bras « pompe », et situé entre le circulateur 7 et un deuxième coupleur 9.

Le **deuxième coupleur 9** est apte à coupler le signal de l'oscillateur local au signal de rétrodiffusion provenant de la fibre optique 15 à tester avant de le transmettre au module de photo-détection 10. Le deuxième coupleur 9 peut être associé à des modules optionnels tels qu'à un module de séparation (polarization beam splitter) ou d'hybridation de polarisation. Le signal de rétrodiffusion peut être modulé au moins à une fréquence Brillouin $v_{rB}$ égale à $v_0 - v_{bref} + v_A + v_{bAS}$, où $v_{BAS}$ est la fréquence de rétrodiffusion Brillouin anti-Stokes pouvant être mesurée en tout point z de la fibre optique 15 à tester. Cela donne la possibilité à l'utilisateur de mesurer la raie anti-Stokes de rétrodiffusion Brillouin tout en profitant d'un oscillateur local sans parasite à basses fréquences et ainsi permet d'améliorer la qualité de la mesure.

Le signal de rétrodiffusion provenant de la fibre optique 15 à tester peut également être modulé à une fréquence Rayleigh $v_{rR}$ égale à $v_0 + v_A$. Cela est possible lorsque le dispositif selon l'invention comporte le troisième coupleur 2 et quatrième coupleur 5. Ce deuxième coupleur 9 permet alors à la rétrodiffusion Rayleigh créée dans la fibre optique 15 à tester de se coupler avec la fréquence de l'oscillateur local. Ainsi, le dispositif selon l'invention permet également de mesurer le spectre de rétrodiffusion Rayleigh. De façon préférée, le signal de rétrodiffusion est modulé, il contient le spectre de rétrodiffusion Rayleigh à une fréquence $v_{rR}$ égale à $v_0 + v_A$ et le spectre de rétrodiffusion Brillouin à une fréquence $v_{rB}$ égale à $v_0 - v_{bref} + v_A + v_{bAS}$.

Ce ou ces battements sont détectables électroniquement grâce à l'utilisation d'un **module de photo-détection 10** positionné en aval du deuxième coupleur 9 et il est apte à transmettre le signal de rétrodiffusion reçu à un module de traitement 12. Le module de photo-détection 10 comporte au moins un photo-détecteur. De façon avantageuse, le module de photo-détection 10 présente une bande passante d'au moins 800 MHz, de préférence d'au moins 1GHz. Le module de photo-détection 10 situé en fin du montage optoélectronique est apte à recevoir un signal issu de la rétrodiffusion de Rayleigh modulé à la fréquence du modulateur acousto-optique $v_A$ et de la rétrodiffusion de Brillouin modulé à la fréquence ($v_{bAS} - v_{bref} + v_A$). Dans ces conditions, en sortie du module de photo-détection 10 le signal électrique obtenu correspondant aux battements détectés à la fréquence de $v_{Batt1} = v_A + (v_{bAS} - v_{Bref})$ correspondant à la rétrodiffusion Brillouin et à la fréquence de $v_{Batt2} = v_A$ correspondant à la rétrodiffusion Rayleigh. Grace à l'architecture du dispositif selon l'invention, ces battements ont été obtenus à partir d'une seule mesure et une seule fibre optique 15 à tester. En outre, ces battements présentent une fréquence plus faible que les signaux incidents du fait que la fréquence $v_0$ issue de la source lumineuse 1 est éliminée. Typiquement, un premier battement correspondant à $_{Batt1} = v_A + (v_{bAS} - v_{Bref})$ présente une fréquence supérieure à 200 MHz, et de préférence autour de 500 MHz, et un second battement correspondant à $v_{Batt2} = v_A$ présente une fréquence par exemple sensiblement égale à 200 MHz, correspondant à l'ordre de grandeur de la fréquence propre au modulateur 6. En effet, $v_A - (v_{bS} + v_{Bref})$ est à environ 20 GHZ et donc hors bande. La configuration optique permet donc d'augmenter le rendement du module de photo-détection 10 en limitant la bande passante à moins de 2 GHz au lieu de 11GHz, de préférence à moins de 1 GHz, par exemple entre 400 MHz et 1 GHz.

Avantageusement, le dispositif selon l'invention peut ne pas comprendre de filtre électrique basse fréquence en sortie du module de photo-détection 10. En effet, comme spécifié précédemment, le positionnement de la fibre de référence 42 sur le même bras optique que la fibre optique 15 à tester permet d'améliorer la qualité de mesure en ayant un signal dans l'oscillateur local sans parasites à basses fréquences. En supprimant ces parasites à basses fréquences, cette configuration donne en outre accès à des informations non exploitables avec les configurations de l'art antérieur (e.g. < 100 MHz).

Le ou les signaux de battement obtenus peuvent être alors numérisés, au moyen d'un **module convertisseur analogique - numérique 11.** Puis ils sont traités par un module 12 de traitement numérique. De façon avantageuse, le module convertisseur analogique - numérique 11 présente une bande passante d'au moins 800 MHz, de préférence d'au moins 1 GHz et une vitesse d'échantillonnage d'au moins 1,6 Gech/s, de préférence d'au moins 2 Gech/s.

Le **module de traitement 12** est configuré pour relier ladite fréquence Brillouin anti-Stokes $v_{bAS}$ à une valeur de température et/ou à une valeur de déformation en tout point z de ladite fibre optique 15 à tester. Ainsi, il est apte à séparer la mesure de température et la mesure de déformation afin d'obtenir, à partir d'une seule mesure, des valeurs distinctes de température et de déformation. Ce dernier peut comporter une carte d'acquisition qui permet d'acquérir le signal généré par le module de photo-détection 10 et donc avoir une bande passante et une fréquence d'échantillonnage en mesure d'analyser un signal correspondant à : $v_A + v_{BAS} - v_{bref}$. Ainsi, avantageusement, le module de traitement 12 est apte à mesurer un signal ayant une bande passante d'au moins 800 MHz, de préférence d'au moins 1 GHz et une vitesse d'échantillonnage d'au moins 1,6 Gech/s, de préférence d'au moins 2 Gech/s dans le but de détecter les deux spectres simultanément (spectre Brillouin et spectre Rayleigh). En outre, de façon avantageuse, il convient d'utiliser une carte d'acquisition avec une résolution élevée comme par exemple une résolution supérieure ou égale à 10 bits. Cela permet, considérant les faibles variations d'intensité du spectre rétrodiffusé Brillouin en fonction de la température, d'atteindre une précision de l'ordre de 1°C. Les modules convertisseur analogique - numérique 11 et de traitement 12 sont présentés de façon distincte mais peuvent être intégrés dans un seul et même ensemble positionné directement après le module de photo-détection 10.

Le module de traitement 12 est apte à découper le signal numérisé en une pluralité de tronçons (T1...Ti...TN) par application d'une fenêtre temporelle glissante de type fenêtre rectangulaire ou de Hamming, ou de Hann ou de Blackman-Harris, chaque tronçon présentant une largeur égale à la largeur temporelle d'une impulsion du signal impulsionnel injecté dans la fibre optique 15 à tester, la largeur de chaque tronçon étant en outre centrée autour d'une date t correspondant à un point de coordonnée z de ladite fibre optique 15 à tester.

De plus, le module 12 de traitement numérique utilise avantageusement un algorithme de transformé de fourrier discrète (de préférence rapide), au moyen par exemple d'un circuit intégré logique connu sous l'acronyme anglais FPGA (pour « Field Programmable Gate Array »). Il permet ainsi de calculer directement la fréquence Brillouin, l'intensité totale de la rétrodiffusion Brillouin et/ou l'intensité totale de la rétrodiffusion Rayleigh en tout point de coordonnée z de la fibre optique 15 sous test. Le module 12 de traitement numérique permet en outre de moyenner les spectres obtenus dans le domaine fréquentiel, pour chaque point z de ladite fibre, à l'issue de l'application de l'algorithme de transformée de fourrier discrète (de préférence rapide), afin de déterminer la mesure répartie de la variation fréquentielle tout le long de ladite fibre optique 15 sous test.

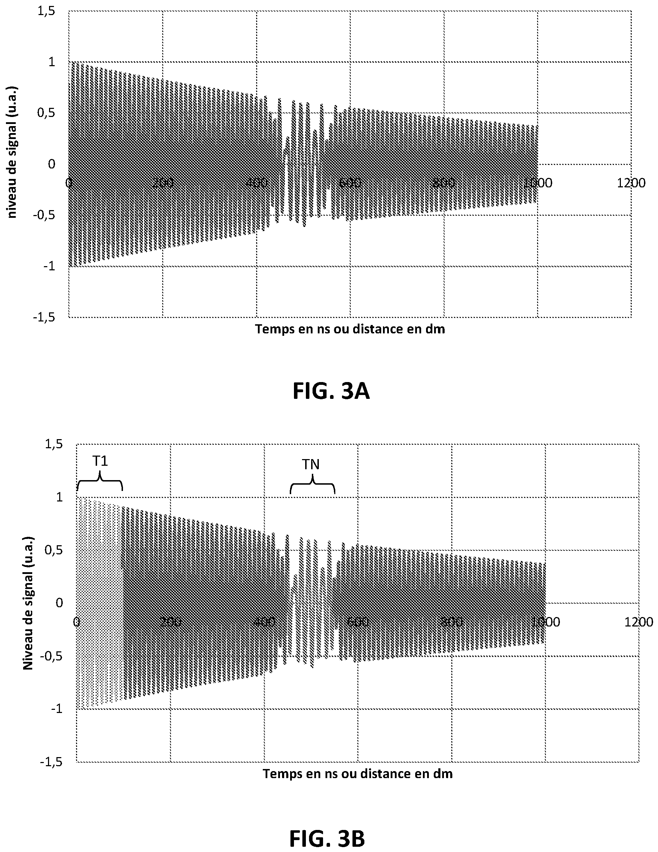

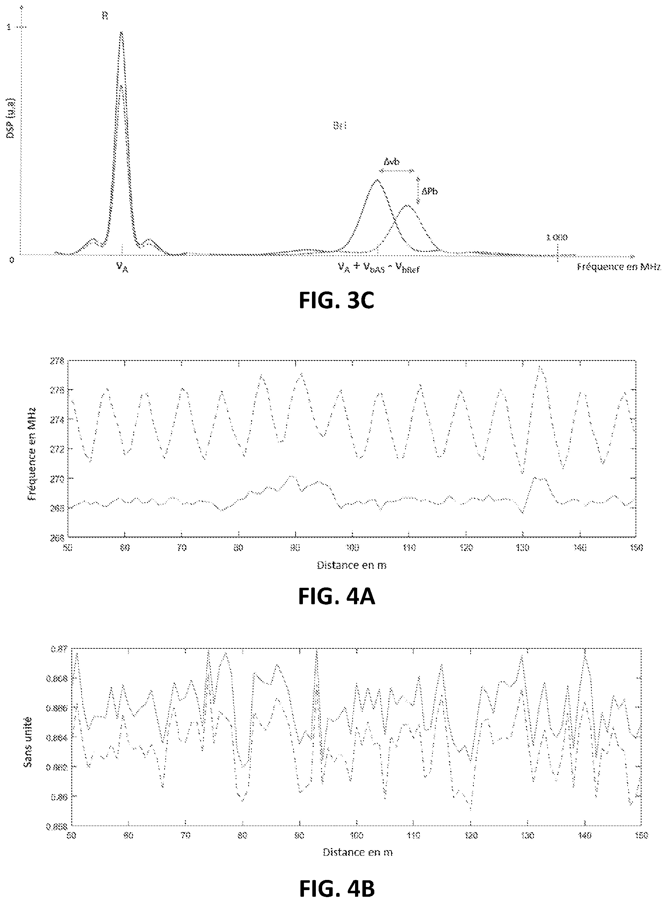

Selon un autre aspect, l'invention porte sur un procédé de traitement numérique d'un signal pouvant être issu, de préférence issu, d'un dispositif optoélectronique de mesure répartie par fibre optique selon l'invention. Les différentes étapes du traitement numérique effectué sur le signal numérisé, sont plus particulièrement illustrées par les Figures 3 à 5 expérimentales et explicatives qui représentent des traces temporelles ou spectrales obtenues à chaque étape du procédé de traitement numérique du signal numérisé, obtenu après recombinaison des signaux rétrodiffusés par la fibre optique sous test et par la fibre optique de référence.

Le procédé de traitement selon l'invention comporte une **première étape de numérisation d'un signal** correspondant au battement entre un signal rétrodiffusé issu d'une fibre optique 15 à tester et un signal de référence, et détecté par un module de photo-détection 10. La Figure 3A représente le signal numérisé en sortie du convertisseur analogique - numérique 11. De façon préférée, le signal numérisé ne provient que d'une seule mesure et le procédé de traitement selon l'invention ne repose que sur une seule mesure réalisée sur une fibre optique 15 à tester. De façon préférée, le signal comporte un battement $v_A + (v_{bAS} - v_{Bref})$ et un battement $v_A$.

Une **deuxième étape** du traitement numérique effectué par le module de traitement numérique 12, consiste à **découper le signal numérisé en tronçons.** La première étape consiste à découper le signal numérisé par tronçons autour de la date t correspondant à la position z sur la fibre de largeur égale à la largeur temporelle de l'impulsion. Le découpage en tronçon est réalisé par exemple par application d'une fenêtre temporelle glissante sur le signal. De préférence, le fenêtrage est réalisé par une fenêtre rectangulaire ou de Hamming ou de Hann ou de Blackman-Harris. Le découpage du signal numérisé est représenté sur la Figure 3B, un premier tronçon à traiter étant repéré par la référence T1 et le tronçon N étant repéré par la référence TN. Chaque tronçon présente avantageusement une largeur égale à la largeur temporelle d'une impulsion du signal impulsionnel injecté dans la fibre optique 5 à tester. Chaque tronçon T1 ...Ti... TN est en outre centré autour d'une date $t_1$, ... $t_i$...$t_N$ correspondant à un point de coordonnée z de ladite fibre optique à tester. Ainsi, pour une position de coordonnée z sur la fibre optique 15, z=2nc*t, avec c la célérité de la lumière et n l'indice optique de la fibre, et le temps $t_z$ correspond alors au temps aller-retour (z) d'une impulsion, décompté à partir du point de départ de l'impulsion jusqu'au point z de mesure. L'écart entre deux points de mesure peut être aussi petit qu'une unité d'échantillonnage (glissement d'un intervalle). Cependant l'écart entre deux mesures indépendantes (résolution spatiale) est considéré comme égal à la largeur de l'impulsion. Ainsi, l'écart entre deux points de mesure indépendants z(t1), z(t2) est égal à la largeur d'une impulsion.

De façon préférée, le signal numérisé présente portion par portion au moins deux spectres correspondant au spectre de Brillouin $v_A + (v_{Bas(z)} - v_{Bref})$ et au spectre de Rayleigh $v_A$. Une **troisième étape** du traitement numérique consiste ensuite à **calculer le spectre fréquentiel** de chaque tronçon T1...Ti... TN dudit signal numérisé, par l'utilisation d'un algorithme de Transformée de Fourier Discrète DFT et de façon préférée un algorithme de Transformée de Fourier Rapide FFT. Ainsi, pour chaque tronçon T1...Ti... TN du signal numérisé on obtient un spectre fréquentiel.

Une **quatrième étape** consiste à répéter les trois étapes de numérisation, découpage et calcul du spectre fréquentiel, et à moyenner les résultats afin d'obtenir un spectre fréquentiel moyenné, interprétable. De préférence, la quatrième étape permet de générer un spectre fréquentiel interprétable comportant un spectre Brillouin et un spectre Rayleigh dont on peut déterminer le maximum pour la mesure de fréquence Brillouin, l'énergie pour la mesure d'intensité Brillouin et l'énergie pour la mesure de l'intensité Rayleigh. Il s'agit de réaliser la moyenne des courbes DFT (de façon préférée FFT) pour réduire au maximum le bruit de fond. On utilise par exemple un algorithme d'ajustement Gaussien ou de Lorentz. Deux spectres fréquentiels moyennés interprétables sont illustrés sur la Figure 3C correspondant au tronçon T1 (trait plein) et au tronçon TN (trait pointillé) du signal découpé de la Figure 3B. Ces spectres fréquentiels moyennés interprétables permettent d'obtenir la fréquence des battements $v_A + (v_{bAS(z)} - v_{Bref})$ et $v_A$. Et par exemple de déterminer, pour le battement $v_A + (v_{bAS(z)} - v_{Bref})$, la position fréquentielle des maxima du spectre Brillouin.

La **cinquième étape** du traitement numérique consiste ensuite à déterminer la variation des positions fréquentielles des maxima du spectre Brillouin et/ou de l'intensité totale des spectres Rayleigh et Brillouin, en fonction des coordonnées z des différents points de la fibre optique 15, et peut inclure une étape consistant à tracer un ou plusieurs graphes de la mesure répartie de variation de maxima fréquence ou d'intensité tout le long de la fibre optique 15 à tester. De façon préférée, la cinquième étape du traitement numérique consiste à déterminer les positions fréquentielles des maxima du spectre Brillouin et l'intensité totale des spectres Rayleigh et Brillouin respectivement, en fonction des coordonnées z des différents points de la fibre optique 15. Par exemple, la Figure 4A représente les positions fréquentielles des maxima du spectre Brillouin en fonction des coordonnées z de la fibre optique 15 à tester dans deux conditions différentes : dans un environnement à température homogène (trait plein) et dans un environnement où la fibre optique 15 est exposée à une source de chaleur (trait pointillé). Cette cinquième étape peut également comprendre une sous étape de détermination du rapport d'intensité totale Rayleigh et d'intensité totale Brillouin en tout point (z) de la fibre dans le but d'en déterminer le ratio de Landau Placzek dépendant du paramètre de température. Les variations uniquement de température créées sur une fibre optique entrainent une augmentation ou une diminution de l'intensité de rétrodiffusion Brillouin. Cette intensité peut être normalisée grâce à une mesure de rétrodiffusion Rayleigh qui permet de donner une information sur les pertes linéaires de la fibre testée ainsi que les défauts de cette dernière pouvant engendrer des pertes optiques. Cette normalisation passe par le calcul du ratio de Landau Placzek. Par exemple, la Figure 4B représente le ratio de Landau Placzek en fonction des coordonnées z de la fibre optique 15 à tester dans les deux conditions cidessus. L'intensité du spectre de rétrodiffusion Brillouin varie en fonction du paramètre de température. Cependant de manière à obtenir une mesure représentative de l'intensité Brillouin, il convient de normaliser l'intensité de rétrodiffusion Brillouin par l'intensité de rétrodiffusion Rayleigh (représentative des pertes optiques dans une fibre). De cette manière seules les variations d'intensité sur le spectre rétrodiffusé Brillouin dues seulement à la température sont mesurées. La variation peut par exemple être mesurée par rapport à des valeurs de positions fréquentielles des maxima, et/ou d'intensité totale, obtenues lors d'une mesure antérieure. Lesdites valeurs étant fonction des coordonnées z des différents points de la fibre optique 15.

Enfin, une **dernière étape du traitement numérique** consiste à appliquer le coefficient de sensibilité propre à la fibre optique 15 à tester aux variations de positions fréquentielles et/ou aux variations d'intensités totales des spectres Rayleigh et Brillouin déterminées en amont. Cela peut permettre d'obtenir deux résultats correspondant à une mesure répartie de déformation et à une mesure répartie de température. Cela n'était pas envisageable à partir d'une seule mesure avec les méthodes de l'art antérieur puisque $v_{Bas(z)}$ dépend de ces deux paramètres. De plus, dans les procédés de l'art antérieur, ces mesures pouvaient être obtenues par une analyse des spectres Brillouin et Raman dont l'acquisition nécessite deux dispositifs différents et donc forcément deux mesures.

En particulier, la dernière étape du traitement numérique consiste à appliquer les coefficients de sensibilité, respectivement de température $C_T$ et de défor-

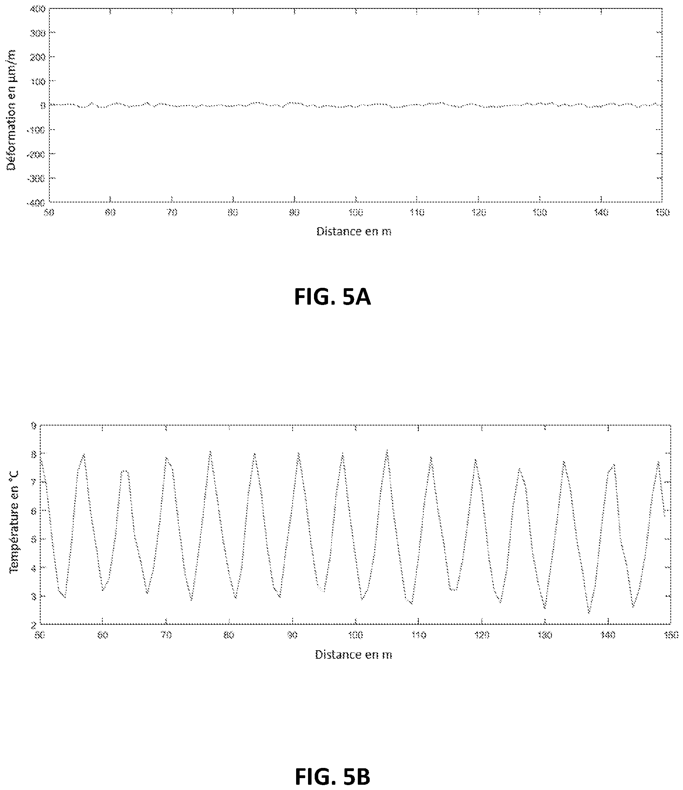

mation $C_\varepsilon$, propres à la fibre optique 15, pour obtenir un résultat respectivement en termes de mesure répartie de température et de mesure répartie de déformation. Les Figures 5A et 5B représentent un graphe obtenu après application des coefficients de sensibilité à la déformation et permettant d'obtenir respectivement la mesure répartie de déformation $\varepsilon$ tout le long de la fibre optique et la mesure répartie de température T tout le long de la fibre optique. Ainsi, sur le graphe de la figure 5A, on constate que la fibre optique analysée n'est pas déformée alors qu'au regard de la figure 5B il y a une variation périodique de la température correspondant bien à la présence d'une source de chaleur à proximité de la fibre optique 15 enroulée. Le coefficient Cvbε de sensibilité à la déformation est typiquement de 0,05 MHz / ($\mu$m/m)) et le coefficient de sensibilité à la température CvbT est typiquement 1 MHz/°C.

De façon plus particulière, ces mesures peuvent être déterminées en inversant le système linéaire (1).

Système linéaire (1) :

$$\begin{bmatrix} \Delta vb \\ \Delta Pb \end{bmatrix} = \begin{bmatrix} Cvb\varepsilon & CvbT \\ CPb\varepsilon & CPbT \end{bmatrix} \times \begin{bmatrix} \delta\varepsilon \\ \delta T \end{bmatrix}$$

Avec CPbε que l'on peut considérer nul par rapport à CPbT = 0.32 %/°C

L'invention permet une suppression de tous les composants électroniques analogiques, excepté le module de photo-détection 10 et permet leur remplacement par un numériseur 11 et un module de traitement numérique 12. Ainsi, on s'affranchit des niveaux de bruit apportés par les composants actifs analogiques tels que les amplificateurs ou les oscillateurs par exemple. De plus, le traitement du signal étant entièrement numérique, les traitements sont moins consommateurs d'énergie et le dispositif présente un encombrement réduit, si bien qu'il peut être embarqué. Il peut donc avantageusement être alimenté en basse tension, typiquement en 12 ou 24 Volts, à partir d'une batterie. Cette batterie peut en outre être rechargeable, par un panneau solaire isolé par exemple, dont le besoin de puissance est de l'ordre de 100 Watt continu. En outre, le dispositif est apte à fonctionner en accédant à une seule extrémité de la fibre optique 15 à tester et comme cela a été vu, il est apte à mesurer de manière séparée la température et les déformations dans la fibre optique 15 à tester en une seule et unique mesure.

De plus le dispositif permet d'utiliser un module de calcul numérique permettant d'effectuer des traitements en parallèle pour chaque tronçon ce qui réduit le temps de mesure à la durée d'acquisition, par exemple pour 10 km de fibre on pourra avoir 10000 acquisitions par seconde avec une fréquence d'horloge du processeur de 10 kHz et ainsi obtenir 10000 moyennes. Le module de calcul numérique comporte avantageusement processeur graphique de type GPU (Graphical Processing Unit) afin de déporter le calcul hautement parallélisable sur celui-ci. Ainsi, le calcul est réalisé en parallèle de l'acquisition et la durée d'une mesure correspond au temps d'acquisition. Ce temps d'acquisition est faible par rapport au temps d'acquisition des dispositifs de l'art antérieur. A titre d'exemple, pour une fibre de 10km, avec une fréquence d'horloge du processeur de 10 kHz, on réalise 10000 acquisitions en une seconde ce qui permet d'avoir 10000 moyennes alors que dans l'état de la technique la durée d'une mesure est supérieure à une minute pour 10 km.

L'utilisation des mesures renvoyées par ce dispositif est consacrée à l'optimisation de la maintenance d'ouvrages du domaine du génie-civil ou du pétrole et gaz par exemple. La continuité des mesures le long de la fibre optique garantie la détection d'un évènement qui ne l'aurait pas été par un autre procédé utilisant des mesures ponctuelles et localisées. La détection précoce des désordres structuraux dans des ouvrages permet une intervention avant une dégradation plus importante. A l'inverse, l'absence de détection peut permettre de retarder les opérations de maintenance systématique si elles ne sont pas nécessaires. Dans les deux cas, un tel dispositif optoélectronique de mesure répartie par fibre optique permet à un exploitant de réaliser des économies significatives sur la maintenance des ouvrages de génie-civil.

## Revendications

1. Dispositif optoélectronique de mesure répartie par fibre optique, ledit dispositif comprenant une source de lumière (1) continue émettant un signal lumineux continu à une première fréquence vo, un modulateur (6) apte à imposer un décalage de fréquence $v_A$ d'au moins 100 Mhz au signal continu et à le transformer en un signal impulsionnel destiné à être injecté dans une fibre optique (15) à tester et un module de photo-détection (10) apte à détecter un signal de rétrodiffusion, provenant de la fibre optique (15) à tester, issu d'une rétrodiffusion Brillouin spontanée et/ou d'une rétrodiffusion Rayleigh provenant de ladite fibre optique (15) à tester,

   ledit dispositif étant **caractérisé en ce qu'**il comprend en outre un premier coupleur (3) et un deuxième coupleur (9), ledit premier coupleur (3) étant apte à diviser ledit signal lumineux continu en deux signaux de fréquence identique répartis dans deux bras,

   - un premier bras (31) reliant le premier coupleur (3) à un bloc fibre de référence (4) comportant une fibre de référence (42), ledit bloc fibre de référence (4) étant apte à émettre un autre signal lumineux de fréquence $v_0 - v_{bref}$, où $v_{bref}$ est la fréquence Brillouin de la fibre de référence (42) sans déformation et à une température de référence,

- un second bras (32) reliant le premier coupleur (3) au deuxième coupleur (9) situé en amont du module de photo-détection (10) et apte à transmettre au deuxième coupleur (9) un signal lumineux continu à une fréquence vo, constituant ainsi un oscillateur local,

ledit deuxième coupleur (9) étant apte à coupler le signal de l'oscillateur local au signal de rétrodiffusion provenant de ladite fibre optique (15) à tester avant de le transmettre au module de photo-détection (10), le signal de rétrodiffusion étant modulé à une fréquence $v_{rB}$ égale à $v_0 - v_{bref} + v_A + v_{bAS}$, où $v_{bAS}$ est la fréquence de rétrodiffusion Brillouin anti-Stokes pouvant être mesurée en tout point z de ladite fibre optique (15) où $v_A$ est la fréquence propre au modulateur (6), et

ledit module de photo-détection (10) étant apte à transmettre le signal de rétrodiffusion reçu, à un module de traitement (12) apte à relier la modulation du signal de rétrodiffusion à une valeur de température et à une valeur de déformation en tout point z de ladite fibre optique (15) à tester.

2. Dispositif selon la revendication 1, **caractérisé en ce qu'**il comprend en outre un troisième coupleur (2) et un quatrième coupleur (5), le troisième coupleur (2) étant apte à diviser ledit signal lumineux continu provenant de la source lumineuse (1) en deux signaux de fréquence identique répartis dans deux bras,

- un premier bras (21) reliant le troisième coupleur (2) au premier coupleur (3) et apte à transmettre au premier coupleur (3) un signal lumineux continu à une fréquence vo,
- un second bras (22) reliant le troisième coupleur (2) au quatrième coupleur (5) situé en amont du modulateur (6) et apte à transmettre au quatrième coupleur (5) un signal initial à une fréquence vo,

ledit quatrième coupleur (5) étant apte à coupler le signal initial $v_0$ au signal lumineux de fréquence $v_0 - v_{bref}$, provenant du bloc de référence (4).

3. Dispositif selon l'une des revendications 1 ou 2, **caractérisé en ce que** la fibre optique de référence (42) présente une fréquence Brillouin décalée d'au moins 200 MHz par rapport à la réponse Brillouin de la fibre optique (15) à tester.

4. Dispositif selon l'une des revendications 2 ou 3, **caractérisé en ce que** le signal de rétrodiffusion contient le spectre de rétrodiffusion Rayleigh à une fréquence $v_{rR}$ égale à $v_0 + v_A$ et le spectre de rétrodiffusion Brillouin à une fréquence $v_{rB}$ égale à $v_0 - v_{bref}$ $+ v_A + v_{bAS}$.

5. Dispositif selon l'une quelconque des revendications 1 à 4, **caractérisé en ce qu'**il comprend un module convertisseur analogique - numérique (11) présentant une bande passante d'au moins 800 MHz et une fréquence d'échantillonnage d'au moins 1,6 Gech/s.

6. Dispositif optoélectronique de mesure répartie par fibre optique selon l'une quelconque des revendications 1 à 5, **caractérisé en ce qu'**il est apte à fonctionner en accédant à une seule extrémité de la fibre optique (15) à tester.

7. Dispositif optoélectronique de mesure répartie par fibre optique selon l'une quelconque des revendications 1 à 6, **caractérisé en ce qu'**il est apte à mesurer de manière séparée la température et les déformations dans la fibre optique (15) à tester en une seule et unique mesure.

8. Dispositif optoélectronique de mesure répartie par fibre optique selon l'une quelconque des revendications 1 à 7, **caractérisé en ce que** le module de traitement (12) est apte à découper le signal numérisé en une pluralité de tronçons (T1 ...Ti...TN) par application d'une fenêtre temporelle glissante de type fenêtre rectangulaire ou de Hamming, ou de Hann ou de Blackman-Harris, chaque tronçon présentant une largeur égale à la largeur temporelle d'une impulsion du signal impulsionnel injecté dans la fibre optique (15) à tester, la largeur de chaque tronçon étant en outre centrée autour d'une date t correspondant à un point de coordonnée z de ladite fibre optique (15) à tester.

9. Dispositif optoélectronique de mesure répartie par fibre optique selon l'une quelconque des revendications 1 à 8, **caractérisé en ce que** la fibre de référence (42) est positionnée le même bras optique que la fibre optique (15) à tester.

10. Dispositif optoélectronique de mesure répartie par fibre optique selon l'une quelconque des revendications 1 à 9, **caractérisé en ce que** la fibre optique de référence (42) du bloc fibre de référence (4) présente une fréquence Brillouin différente de celle de la fibre optique (15) à tester.

11. Dispositif optoélectronique de mesure répartie par fibre optique selon la revendication 10, **caractérisé en ce que** la fréquence Brillouin de la fibre optique de référence (42) présente un écart de fréquence avec la fréquence Brillouin de la fibre optique (15) à tester, compris entre 300 MHz et 1 GHz.

12. Dispositif optoélectronique de mesure répartie par fibre optique selon l'une quelconque des revendications 1 à 11, **caractérisé en ce que** le second bras (32) peut comporter un module d'hybridation de polarisation, ou un module de séparation, ou un brouilleur de polarisation (8), disposé alors en amont des entrées d'un deuxième coupleur (9).

13. Dispositif optoélectronique de mesure répartie par fibre optique selon l'une quelconque des revendications 1 à 12, **caractérisé en ce que** le signal impulsionnel provenant du modulateur (6) comporte au moins deux composantes,

- une composante impulsionnelle de fréquence $vp1 = v_0 - v_{bref} + v_A$, et
- une composante impulsionnelle de fréquence $vp2 = v_0 + v_A$.

14. Dispositif optoélectronique de mesure répartie par fibre optique selon l'une quelconque des revendications 1 à 13, **caractérisé en ce que** le module de photo-détection (10) reçoit un signal issu de la rétrodiffusion de Rayleigh modulé à la fréquence du modulateur acousto-optique $v_A$ et de la rétrodiffusion de Brillouin modulé à la fréquence $v_{bAS} - v_{bref} + v_A$ sans qu'il n'y ait de recouvrement entre les deux spectres.

15. Procédé de traitement numérique d'un signal issu d'un dispositif optoélectronique de mesure répartie par fibre optique selon l'une des revendications 1 à 14, ledit procédé comprenant les étapes suivantes :

- numériser un signal correspondant au battement entre un signal rétrodiffusé issu d'une fibre optique (15) à tester et un signal de référence, et détecté par un module de photo-détection (10) ;
- découper ledit signal numérisé en une pluralité de tronçons (T1 ...Ti...TN) par application d'une fenêtre temporelle glissante de type fenêtre rectangulaire ou de Hamming, ou de Hann ou de Blackman-Harris, chaque tronçon présentant une largeur égale à la largeur temporelle d'une impulsion du signal impulsionnel injecté dans la fibre optique (15) à tester, la largeur de chaque tronçon étant en outre centrée autour d'une date t correspondant à un point de coordonnée z de ladite fibre optique (15) à tester ;
- calculer, par utilisation d'un algorithme de transformée de fourrier discrète, le spectre fréquentiel de chaque tronçon (T1 ...Ti...TN) dudit signal numérisé ;
- répéter les trois premières étapes et moyenner les spectres fréquentiels obtenus pour chaque point z de ladite fibre optique (15) à tester ;
- à partir des spectres fréquentiels moyennés, déterminer la variation des maxima de fréquence de la rétrodiffusion Brillouin, et/ou la variation de l'intensité totale de la rétrodiffusion Brillouin et/ou la variation de l'intensité totale de la rétrodiffusion Rayleigh, en fonction du temps aller et retour $t_z$ de rétrodiffusion ; et
- appliquer un coefficient de sensibilité à la température d'une part et un coefficient de sensibilité à la déformation d'autre part, sur ladite ou lesdites variations déterminées, afin d'obtenir un résultat en terme de mesure répartie en température et/ou un résultat en terme de mesure répartie en déformation.

16. Procédé de traitement numérique selon la revendication 15, **caractérisé en ce qu'**il comprend la détermination, à partir des spectres fréquentiels moyennés, de la variation des maxima de fréquence de la rétrodiffusion Brillouin Anti-Stokes et la variation de l'intensité totale de la rétrodiffusion Brillouin et la variation de l'intensité totale de la rétrodiffusion Rayleigh en fonction du temps aller et retour $t_z$ de rétrodiffusion, ainsi que la détermination du rapport d'intensité Rayleigh et d'intensité Brillouin en tout point (z) de la fibre.

17. Procédé de traitement numérique selon l'une des revendications 14 ou 15, **caractérisé en ce que** le signal numérisé présente portion par portion au moins deux spectres correspondant au spectre de Brillouin $v_A + ((v_{bAS(z)} - v_{bref})$ et au spectre de Rayleigh $v_A$.

18. Procédé de traitement numérique selon l'une quelconque des revendications 15 à 17, **caractérisé en ce qu'**il peut également comprendre une sous étape de détermination d'un rapport intensité totale Rayleigh sur intensité totale Brillouin en tout point (z) de la fibre dans le but d'en déterminer un ratio de Landau Placzek dépendant du paramètre de température.

**Patentansprüche**

1. Optoelektronische Vorrichtung zur verteilten Messung mittels optischer Faser, wobei die Vorrichtung umfasst: eine Dauerlichtquelle (1), die ein kontinuierliches Lichtsignal mit einer ersten Frequenz $v_0$ aussendet, einen Modulator (6), der in der Lage ist, auf das kontinuierliche Signal eine Frequenzverschiebung $v_A$ von mindestens 100 MHz anzuwenden und es in ein Impulssignal umzuwandeln, das dazu bestimmt ist, in eine zu prüfende optische Faser (15) eingespeist zu werden, und ein Lichterkennungsmodul (10), das in der Lage ist, ein von der zu prüfenden optischen Faser (15) stammendes Rückstreusignal zu erkennen, das aus einer spontanen Brillouin-Rückstreuung und/oder einer Rayleigh-Rückstreuung entsteht, die von der zu prüfenden optischen Faser (15) ausgehen,

wobei die Vorrichtung **dadurch gekennzeichnet ist, dass** sie weiter einen ersten Koppler (3) und einen zweiten Koppler (9) umfasst, wobei der erste Koppler (3) in der Lage ist, das kontinuierliche Lichtsignal in zwei Signale mit identischer Frequenz aufzuteilen, die auf zwei Arme verteilt sind,

- einen ersten Arm (31), der den ersten Koppler (3) mit einem Referenzfaserblock (4) verbindet, der eine Referenzfaser (42) umfasst, wobei der Referenzfaserblock (4) in der Lage ist, ein weiteres Lichtsignal mit der Frequenz $v_0 - v_{bref}$ auszusenden, wobei $v_{bref}$ die Brillouin-Frequenz der Referenzfaser (42) ohne Verzerrung und bei einer Referenztemperatur ist,
- einen zweiten Arm (32), der den ersten Koppler (3) mit dem zweiten Koppler (9) verbindet, welcher sich stromaufwärts des Lichterkennungsmoduls (10) befindet und in der Lage ist, ein kontinuierliches Lichtsignal mit einer Frequenz $v_0$ zu dem zweiten Koppler (9) zu übertragen, wodurch er einen lokalen Oszillator bildet,

wobei der zweite Koppler (9) in der Lage ist, das Signal des lokalen Oszillators mit dem Rückstreusignal zu koppeln, das von der zu prüfenden optischen Faser (15) kommt, bevor es zu dem Lichterkennnungsmodul (10) übertragen wird,

wobei das Rückstreusignal mit einer Frequenz $v_{rB}$ moduliert wird, die gleich $v_0 - v_{bref} + v_A + v_{bAS}$ ist, wobei $v_{bAS}$ die Anti-Stokes-Brillouin-Rückstreufrequenz ist, die an jedem Punkt z der optischen Faser (15) messbar ist, wobei $v_A$ die Eigenfrequenz des Modulators (6) ist, und

wobei das Lichterkennungsmodul (10) in der Lage ist, das empfangene Rückstreusignal zu einem Verarbeitungsmodul (12) zu übertragen, das in der Lage ist, die Modulation des Rückstreusignals an jedem Punkt z der zu prüfenden optischen Faser (15) mit einem Temperaturwert und einem Verzerrungswert in Beziehung zu setzen.

2. Vorrichtung nach Anspruch 1, **dadurch gekennzeichnet, dass** sie außerdem einen dritten Koppler (2) und einen vierten Koppler (5) umfasst, wobei der dritte Koppler (2) in der Lage ist, das von der Lichtquelle (1) ausgehende kontinuierliche Lichtsignal in zwei Signale mit identischer Frequenz aufzuteilen, die auf zwei Arme verteilt sind,

- einen ersten Arm (21), der den dritten Koppler (2) mit dem ersten Koppler (3) verbindet und in der Lage ist, ein kontinuierliches Lichtsignal mit einer Frequenz $v_0$ zu dem ersten Koppler (3) zu übertragen,
- einen zweiten Arm (22), der den dritten Koppler (2) mit dem vierten Koppler (5) verbindet, der sich stromaufwärts des Modulators (6) befindet und in der Lage ist, ein Anfangssignal mit einer Frequenz $v_0$ zu dem vierten Koppler (5) zu übertragen,

wobei der vierte Koppler (5) in der Lage ist, das Anfangssignal $v_0$ mit dem Lichtsignal mit der Frequenz $v_0 - v_{bref}$ zu koppeln, das vom Referenzblock (4) kommt.

3. Vorrichtung nach einem der Ansprüche 1 oder 2, **dadurch gekennzeichnet, dass** die optische Referenzfaser (42) eine Brillouin-Frequenz aufweist, die um mindestens 200 MHz gegenüber der Brillouin-Antwort der zu prüfenden optischen Faser (15) versetzt ist.

4. Vorrichtung nach einem der Ansprüche 2 oder 3, **dadurch gekennzeichnet, dass** das Rückstreusignal das Rayleigh-Rückstreuspektrum mit einer Frequenz $v_{rR}$ gleich $v_0 + v_A$ und das Brillouin-Rückstreuspektrum mit einer Frequenz $v_{rB}$ gleich $v_0 - v_{bref} + v_A + v_{bAS}$ enthält.

5. Vorrichtung nach einem der Ansprüche 1 bis 4, **dadurch gekennzeichnet, dass** sie ein Analog-Digital-Wandlermodul (11) mit einer Bandbreite von mindestens 800 MHz und einer Abtastfrequenz von mindestens 1,6 Gech/s umfasst.

6. Optoelektronische Vorrichtung zur verteilten Messung mittels optischer Faser nach einem der Ansprüche 1 bis 5, **dadurch gekennzeichnet, dass** sie in der Lage ist, mit Zugriff auf nur ein Ende der zu prüfenden optischen Faser (15) zu funktionieren.

7. Optoelektronische Vorrichtung zur verteilten Messung mittels optischer Faser nach einem der Ansprüche 1 bis 6, **dadurch gekennzeichnet, dass** sie in der Lage ist, in der zu prüfenden optischen Faser (15) in einer einzigen Messung die Temperatur und die Verzerrungen getrennt zu messen.

8. Optoelektronische Vorrichtung zur verteilten Messung mittels optischer Faser nach einem der Ansprüche 1 bis 7, **dadurch gekennzeichnet, dass** das Verarbeitungsmodul (12) in der Lage ist, das digitalisierte Signal in eine Vielzahl von Abschnitte (T1...Ti...TN)) aufzuteilen, durch Anwendung eines gleitenden Zeitfensters vom Typ Rechteck- oder Hamming- oder Hann- oder Blackman-Harris-Fenster, wobei jeder Abschnitt eine Breite aufweist, die gleich der zeitlichen Breite eines Impulses des in die zu prüfende optische Faser (15) eingespeisten Impulssignals ist, wobei die Breite jedes Abschnitts außerdem um einen Zeitpunkt t zentriert ist, der einem z-Koordinatenpunkt der zu prüfenden optischen Faser (15) entspricht.

9. Optoelektronische Vorrichtung zur verteilten Messung mittels optischer Faser nach einem der Ansprüche 1 bis 8, **dadurch gekennzeichnet, dass** die Referenzfaser (42) in demselben optischen Arm wie die zu prüfende optische Faser (15) angeordnet ist.

10. Optoelektronische Vorrichtung zur verteilten Messung mittels optischer Faser nach einem der Ansprüche 1 bis 9, **dadurch gekennzeichnet, dass** die optische Referenzfaser (42) des Referenzfaserblocks (4) eine andere Brillouin-Frequenz aufweist als die zu prüfende optische Faser (15).

11. Optoelektronische Vorrichtung zur verteilten Messung mittels optischer Faser nach Anspruch 10, **dadurch gekennzeichnet, dass** die Brillouin-Frequenz der optischen Referenzfaser (42) eine Frequenzdifferenz zur Brillouin-Frequenz der zu prüfenden optischen Faser (15) zwischen 300 MHz und 1 GHz aufweist.

12. Optoelektronische Vorrichtung zur verteilten Messung mittels optischer Faser nach einem der Ansprüche 1 bis 11, **dadurch gekennzeichnet, dass** der zweite Arm (32) ein Polarisationshybridisierungsmodul oder ein Trennmodul oder einen Polarisations-Scrambler (8) umfassen kann, das beziehungsweise der vor den Eingängen eines zweiten Kopplers (9) angeordnet ist.

13. Optoelektronische Vorrichtung zur verteilten Messung mittel optischer Faser nach einem der Ansprüche 1 bis 12, **dadurch gekennzeichnet, dass** das von dem Modulator (6) kommende Impulssignal aus mindestens zwei Komponenten besteht:

- einer Impulskomponente der Frequenz vp1 = $v_0$ - $v_{bref}$ + $v_A$ und
- einer Impulskomponente der Frequenz vp2 = $v_0$ + $v_A$.

14. Optoelektronische Vorrichtung zur verteilten Messung mittels optischer Faser nach einem der Ansprüche 1 bis 13, **dadurch gekennzeichnet, dass** das Lichterkennungsmodul (10) ein Signal empfängt, das aus der mit der Frequenz des akustooptischen Modulators $v_A$ modulierten Rayleigh-Rückstreuung und aus der mit der Frequenz $v_{bAS}$ - $v_{bref}$ + $v_A$ modulierten Brillouin-Rückstreuung hervorgeht, ohne dass es zu einer Überlappung der beiden Spektren kommt.

15. Verfahren zur digitalen Verarbeitung eines Signals von einer optoelektronischen Vorrichtung zur verteilten Messung mittels optischer Faser nach einem der Ansprüche 1 bis 14, wobei das Verfahren die folgenden Schritte umfasst:

- Digitalisieren eines Signals, das der Schwebung zwischen einem von einer zu prüfenden optischen Faser (15) rückgestreuten Signal und einem Referenzsignal entspricht und von einem Lichterkennungsmodul (10) erkannt wird;
- Aufteilen des digitalisierten Signals in eine Vielzahl von Abschnitten (T1...Ti...TN)) aufzuteilen, durch Anwendung eines gleitenden Zeitfensters vom Typ Rechteck- oder Hammingoder Hann- oder Blackman-Harris-Fenster, wobei jeder Abschnitt eine Breite aufweist, die gleich der zeitlichen Breite eines Impulses des in die zu prüfende optische Faser (15) eingespeisten Impulssignals ist, wobei die Breite jedes Abschnitts außerdem um einen Zeitpunkt t zentriert ist, der einem z-Koordinatenpunkt der zu prüfenden optischen Faser (15) entspricht;
- Berechnen des Frequenzspektrums jedes Abschnitts (T1...Ti...TN) des digitalisierten Signals unter Verwendung eines Algorithmus zur diskreten Fouriertransformation;
- Wiederholen der ersten drei Schritte und Mitteln der erhaltenen Frequenzspektren für jeden Punkt z der zu prüfenden optischen Faser (15);
- Ermitteln, ausgehend von den gemittelten Frequenzspektren, der Änderung der Frequenzmaxima der Brillouin-Rückstreuung und/oder der Änderung der Gesamtintensität der Brillouin-Rückstreuung und/oder der Änderung der Gesamtintensität der Rayleigh-Rückstreuung als Funktion der Laufzeit $t_z$ der Rückstreuung; und
- Anwenden eines Temperaturempfindlichkeitskoeffizienten einerseits und eines Verzerrungsempfindlichkeitskoeffizienten andererseits auf die ermittelte(n) Änderung(en), um ein Ergebnis in Form eines temperaturverteilten Messwerts und/oder ein Ergebnis in Form eines verzerrungsverteilten Messwerts zu erhalten.

16. Verfahren zur digitalen Verarbeitung nach Anspruch 15, **dadurch gekennzeichnet, dass** es die Ermittlung, ausgehend von den gemittelten Frequenzspektren, der Änderung der Frequenzmaxima der Anti-Stokes-Brillouin-Rückstreuung und der Änderung der Gesamtintensität der Brillouin-Rückstreuung und der Änderung der Gesamtintensität der Rayleigh-Rückstreuung als Funktion der Laufzeit $t_z$ der Rückstreuung sowie die Ermittlung des Verhältnisses der Rayleigh-Intensität zur Brillouin-Intensität an jedem Punkt (z) der Faser umfasst.

17. Verfahren zur digitalen Verarbeitung nach einem der Ansprüche 14 oder 15, **dadurch gekennzeichnet, dass** das digitalisierte Signal abschnittsweise mindestens zwei Spektren aufweist, die dem Brillouin-Spektrum $v_A$ + (($v_{bAS}$ (z) - $v_{bref}$) und dem Rayleigh-Spektrum $v_A$ entsprechen.

**18.** Verfahren zur digitalen Verarbeitung nach einem der Ansprüche 15 bis 17, **dadurch gekennzeichnet, dass** es auch einen Teilschritt der Ermittlung eines Verhältnisses der Gesamt-Rayleigh-Intensität zur Gesamt-Brillouin-Intensität an jedem Punkt (z) der Faser umfassen kann, um daraus ein Landau-Placzek-Verhältnis in Abhängigkeit von dem Temperaturparameter zu ermitteln.

**Claims**

**1.** An optoelectronic distributed measurement device based on optical fiber, said device comprising a continuous light source (1) transmitting a continuous light signal at a first frequency $v_0$, a modulator (6) able to impose a frequency offset $v_A$ of at least 100 MHz on the continuous signal and to transform it into a pulse signal to be injected into an optical fiber (15) to be tested and a photo-detection module (10) able to detect a backscatter signal, from the optical fiber (15) to be tested, resulting from a spontaneous Brillouin backscattering and/or from a Rayleigh backscattering from said optical fiber (15) to be tested,
said device being **characterized in that** it also comprises a first coupler (3) and a second coupler (9), said first coupler (3) being able to divide said continuous light signal into two signals of identical frequency distributed into two arms,

- a first arm (31) connecting the first coupler (3) to a reference fiber block (4) including a reference fiber (42), said reference fiber block (4) being able to emitting another light signal of frequency $v_0 - v_{bref}$, where $v_{bref}$ is the Brillouin frequency of the reference fiber (42) without deformation and at a reference temperature,
- a second arm (32) connecting the first coupler (3) to the second coupler (9) located upstream of the photo-detection module (10) and able to transmit to the second coupler (9) a continuous light signal at a frequency $v_0$, thus constituting a local oscillator,

said second coupler (9) being able to couple the signal from the local oscillator to the backscattering signal from said optical fiber (15) to be tested before transmitting it to the photo-detection module (10), the backscattering signal being modulated at a frequency $v_{rB}$ equal to $v_0 - v_{bref} + v_A + v_{bAS}$, where $v_{bAS}$ is the anti-Stokes Brillouin backscattering frequency which can be measured at any point z of said optical fiber (15), where $v_A$ is the natural frequency at the modulator (6), and
said photo-detection module (10) being able to transmit the received backscattering signal to a processing module (12) able to link the modulation of the backscattering signal to a temperature value and to a deformation value at any point z of said optical fiber (15) to be tested.

**2.** The device according to claim 1, **characterized in that** it also comprises a third coupler (2) and a fourth coupler (5), the third coupler (2) being able to divide said continuous light signal from the light source (1) into two signals of identical frequency distributed into two arms,

- a first arm (21) connecting the third coupler (2) to the first coupler (3) and able to transmit to the first coupler (3) a continuous light signal at a frequency $v_0$,
- a second arm (22) connecting the third coupler (2) to the fourth coupler (5) located upstream of the modulator (6) and able to transmit to the fourth coupler (5) an initial signal at a frequency $v_0$,

said fourth coupler (5) being able to couple the initial signal $v_0$ to the light signal of frequency $v_0 - v_{bref}$, from the reference block (4).

**3.** The device according to one of claims 1 or 2, **characterized in that** the reference optical fiber (42) has a Brillouin frequency shift by at least 200 MHz compared to the Brillouin response of the optical fiber (15) to be tested.

**4.** The device according to one of claims 2 or 3, **characterized in that** the backscattering signal contains the Rayleigh backscattering spectrum at a frequency $v_{rR}$ equal to $v_0 + v_A$ and the Brillouin backscattering spectrum at a frequency $v_{rB}$ equal to $v_0 - v_{bref} + v_A + v_{bAS}$.

**5.** The device according to any one of claims 1 to 4, **characterized in that** it comprises an analog-to-digital converter module (11) having a bandwith of at least 800 MHz and a sampling frequency of at least 1.6 Gech/s.

**6.** The optoelectronic distributed measurement device based on optical fiber according to any one of claims 1 to 5, **characterized in that** it is able to function by gaining access to a single end of the optical fiber (15) to be tested.

**7.** The optoelectronic distributed measurement device based on optical fiber according to any one of claims 1 to 6, **characterized in that** it is able to separately measure the temperature and the deformations in the optical fiber (15) to be tested in a single and unique measurement.

**8.** The optoelectronic distributed measurement device based on optical fiber according to any one of claims 1 to 7, **characterized in that** the processing module (12) is able to slice the digitized signal into a plurality of slices (T1...Ti...TN) by application of a sliding time window of the rectangular or Hamming or Hann or Blackman-Harris window type, each slice having a width equal to the time width of an pulse of the pulsive signal injected into the optical fiber (15) to be tested, the width of each slice also being centered around a date t corresponding to a point of coordinate z of said optical fiber (15) to be tested.

9. The optoelectronic distributed measurement device based on optical fiber according to any one of claims 1 to 8, **characterized in that** the reference fiber (42) is positioned on the same optical arm as the optical fiber (15) to be tested.

10. The optoelectronic distributed measurement device based on optical fiber according to any one of claims 1 to 9, **characterized in that** the reference optical fiber (42) of the reference fiber block (4) has a Brillouin frequency different from that of the optical fiber (15) to be tested.

11. The optoelectronic distributed measurement device based on optical fiber according to claim 10, **characterized in that** the Brillouin frequency of the reference optical fiber (42) has a frequency gap with the Brillouin frequency of the optical fiber (15) to be tested, comprised between 300 MHz and 1 GHz.

12. The optoelectronic distributed measurement device based on optical fiber according to any one of claims 1 to 11, **characterized in that** the second arm (32) can include a polarization hybridization module, or a separation module, or a polarization scrambler (8), then located upstream of the inputs of a second coupler (9).

13. The optoelectronic distributed measurement device based on optical fiber according to any one of claims 1 to 12, **characterized in that** the pulse signal from the modulator (6) includes at least two components,

- a pulse component with frequency $vp1 = v_0 - v_{bref} + v_A$, and
- a pulse component with frequency $vp2 = v_0 + v_A$.

14. The optoelectronic distributed measurement device based on optical fiber according to any one of claims 1 to 13, **characterized in that** the photodetection module (10) receives a signal from Rayleigh backscattering modulated at the frequency of the acousto-optical modulator $v_A$ and from the Brillouin backscattering modulated at the frequency $v_{bAS} - v_{bref} + v_A$ without there being any overlap between the two spectra.

15. A digital processing method for a signal from an optoelectronic distributed measurement device based on optical fiber according to one of claims 1 to 14, said method comprising the following steps:

- digitizing a signal corresponding to the beat frequency between a backscattered signal derived from an optical fiber (15) to be tested and a reference signal, and detected by a photo-detection module (10);
- slicing said digitized signal into a plurality of slices (T1...Ti...TN) by applying a sliding time window of the rectangular or Hamming or Hann or Blackman-Harris window type, each slice having a width equal to the time width of a pulse of the pulse signal injected into the optical fiber (15) to be tested, the width of each slice also being centered around a data t corresponding to a point with coordinate z of said optical fiber (15) to be tested;
- calculating, by the use of a discrete Fourier transform algorithm, the frequency spectrum of each slice (T1...Ti...TN) of said digitized signal;
- repeating the first three steps and averaging the frequency spectra obtained for each point z of said optical fiber (15) to be tested;
- based on the averaged frequency spectra, determining the variation of the frequency maxima of the Brillouin backscattering, and/or the variation of the total intensity of the Brillouin backscattering and/or the variation of the total intensity of the Rayleigh backscattering, as a function of the backscattering round trip time $t_z$; and
- applying a sensitivity coefficient to the temperature, on the one hand, and a sensitivity coefficient to the deformation, on the other hand, to said determined variations, in order to obtain a result in terms of a distributed measurement of temperature and/or a result in terms of distributed measurement of deformation.

16. The digital processing method according to claim 15, **characterized in that** it comprises the determination, based on averaged frequency spectra, of the variation of the frequency maxima of the Anti-Stokes Brillouin backscattering and of the variation of the total intensity of the Brillouin backscattering and the variation of the total intensity of the Rayleigh backscattering as a function of the backscattering round trip time $t_z$, as well as the determination of the ratio of Rayleigh intensity and Brillouin intensity at any point (z) of the fiber.

17. The digital processing method according to one of claims 14 or 15, **characterized in that** the digitized signal has, slice by slice, at least two spectra corresponding to the Brillouin spectrum $v_A + ((v_{bAS} (z) - v_{bref})$ and to the Rayleigh spectrum $v_A$.

18. The digital processing method according to any one of claims 15 to 17, **characterized in that** it can also comprise a sub-step of determining a ratio of total Rayleigh intensity to total Brillouin intensity at any point (z) of the fiber for the purpose of determining a Landau Placzek ratio depending on the parameter of temperature.

$$\nu_P = \nu_0 + \nu_A$$

$$\nu_F = \nu_0 + \nu_A + \nu_{Bz}$$

$$\nu_{OL} = \nu_0 + \nu_{Bref}$$

$$\nu_{Batt} = \nu_A + (\nu_{Bz} - \nu_{Bref})$$

**FIG. 1**
(art antérieur)

**FIG. 2**

**FIG. 3A**

**FIG. 3B**

**FIG. 3C**

**FIG. 4A**

**FIG. 4B**

**FIG. 5A**

**FIG. 5B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7283216 B
- JP 2010217029 A
- WO 2008047329 A

**Littérature non-brevet citée dans la description**

- **ALAHBABI, M. N. et al.** *Optics Letters,* 01 Juin 2005, vol. 30 (11), 1276-78